# FASCICULE DE BREVET EUROPEEN

(11) **EP 0 945 604 B1**
(45) Date de publication et mention de la délivrance du brevet: **19.10.2005**
(21) Numéro de dépôt: 99400662.5
(22) Date de dépôt: 18.03.1999
(51) Int. Cl.: F02B 23/10, F02B 17/00, F02F 1/24, F02B 3/02

(54) **Nouveau moteur à combustion interne à quatre temps, allumage commandé et injection directe**
Fremdgezündete Viertaktbrennkraftmaschine mit Direkteinspritzung
Spark ignited four stroke direct injection internal combustion engine

(30) Priorité: 26.03.1998 FR 9803880
(43) Date de publication de la demande: 29.09.1999
(73) Titulaire: Institut Français du Pétrole, 92852 Rueil-Malmaison Cedex (FR)
(72) Inventeur: Monnier, Gaétan, 78955 Carrières sous Poissy (FR)

(56) Documents cités:
- EP-A- 0 824 185
- DE-C- 19 508 986
- US-A- 4 216 745
- US-A- 4 543 929
- US-A- 5 327 864

## Description

La présente invention concerne le domaine des moteurs à combustion interne à 4 temps, à allumage commandé et particulièrement à injection directe de carburant dans la chambre de combustion.

Dans ce type de moteurs, l'injection de carburant a lieu directement dans la chambre de combustion et non pas, comme dans les autres moteurs, dans le ou les conduit(s) d'admission. L'injection directe de carburant permet de mieux maîtriser la combustion dans la mesure où les injecteurs peuvent réagir et être commandés au niveau du cycle moteur.

De nombreuses conceptions de moteurs ont déjà été faites dans ce sens. Ainsi on connaît des moteurs à 4 temps et à allumage commandé ayant 4 soupapes par cylindre, une bougie placée dans la culasse sur l'axe longitudinal du cylindre ayant des conduits d'admission orientés et débouchant sensiblement parallèlement à l'axe du cylindre, et dans lesquels l'injecteur de carburant débouche juste en dessous des soupapes d'admission.

Le piston associé à ces moteurs présente couramment un évidement de forme spécifique destiné à canaliser le jet d'injecteur et renforcer le mouvement des gaz dans la chambre de combustion.

On connaît encore des moteurs dont le piston présente un bol (ou évidement) sphérique disposé, au point mort haut, juste en face de l'injecteur de carburant et de la bougie d'allumage. La demande de brevet EP-A1-0 558 072 décrit un moteur ayant cette caractéristique.

Tous ces moteurs présentent de grosses cylindrées (alésages plutôt supérieurs à 80 mm) et ont couramment quatre soupapes par cylindre.

On connaît aussi des moteurs de même type mais utilisant trois soupapes par cylindre. La demande de brevet EN. 97/06731 déposée au nom du Demandeur illustre un exemple particulier de tels moteurs.

Il est également connu, par le document US 5 327 864, un moteur avec un premier moyen d'allumage disposé à proximité de la soupape d'admission, un élément d'injection de carburant placé à proximité et en dessous du premier moyen d'allumage. le moteur a une configuration telle que le conduit d'admission, l'élément d'injection et le premier moyen d'allumage sont disposés dans le même demi-cylindre.

Les moteurs de ce type permettent une combustion en mode stratifié à faible charge et/ou une combustion dite homogène à fortes charges.

La combustion est dite stratifiée quand une zone de la chambre de combustion contient un mélange plus riche que le reste de la chambre, à faible charge. Ceci permet d'enflammer plus facilement le mélange puisque la zone enrichie en carburant se trouve globalement à proximité de la bougie.

A fortes charges, la combustion dite homogène est préconisée. Il s'agit alors d'avoir un mélange très homogène dans toute la chambre de combustion.

Actuellement, les moteurs à injection directe fonctionnent correctement soit dans un mode, soit dans l'autre. Il est généralement difficile de concilier les deux modes de fonctionnement.

La présente invention concerne le type de moteurs qui vient d'être décrit et elle permet de résoudre certains des problèmes associés.

Plus précisément la présente invention permet une réduction de la consommation de carburant, grâce à une diminution du travail de pompage.

De plus, les transferts thermiques dans et autour de la chambre de combustion sont largement réduits selon la présente invention.

De façon spécifique, la présente invention concerne des moteurs à injection directe, à combustion stratifiée, ayant des cylindres de petites dimensions, deux soupapes et une commande centrale des soupapes.

Ainsi la présente invention a pour objet un moteur à combustion interne à 4 temps à allumage commandé et à injection directe de carburant, comprenant au moins une chambre de combustion délimitée par un piston, un cylindre et une culasse, un conduit d'admission associé à une soupape d'admission, un conduit d'échappement avec lequel coopère une soupape d'échappement, un premier moyen d'allumage disposé à proximité la soupape d'admission, un élément d'injection de carburant placé à proximité et en dessous dudit premier moyen d'allumage, le conduit d'admission, l'élément d'injection et le premier moyen d'allumage étant disposés dans le même demi-cylindre,

Selon l'invention, l'axe de l'élément d'injection est situé à moins de 60° du plan contenant l'axe longitudinal du cylindre.

En outre, la face supérieure du piston présente un profil proche de celui de la face inférieure de la culasse et ledit piston présente un évidement disposé à proximité de la région où débouche ledit premier moyen d'allumage.

De façon particulière, l'évidement dans le piston présente une forme sphérique ou semi-sphérique.

Conformément à l'invention, ladite soupape d'admission et ladite soupape d'échappement sont diamétralement opposées.

Selon un autre mode de réalisation de l'invention, le moteur comprend en outre un deuxième moyen d'allumage.

Ainsi, le deuxième moyen d'allumage est disposé dans le demi cylindre qui contient la soupape d'échappement.

Plus précisément, le deuxième moyen d'allumage est disposé à côté de la soupape d'échappement.

D'autres caractéristiques, détails, avantages de l'invention apparaîtront mieux à la lecture de la description qui va suivre, faite à titre illustratif et nullement limitatif en référence aux dessins annexés sur lesquels :
- La figure 1A est une coupe simplifiée de la partie supérieure d'une chambre de combustion selon l'invention;
- La figure 1 B est une coupe transversale de la partie supérieure du piston;
- La figure 2 est une perspective simplifiée de la zone culasse-partie supérieure du piston, selon un premier mode de réalisation de l'invention;
- La figure 3 est une vue de dessus d'un deuxième mode de réalisation de l'invention; et
- La figure 4 est une perspective simplifiée du deuxième mode de réalisation de l'invention, côté culasse.

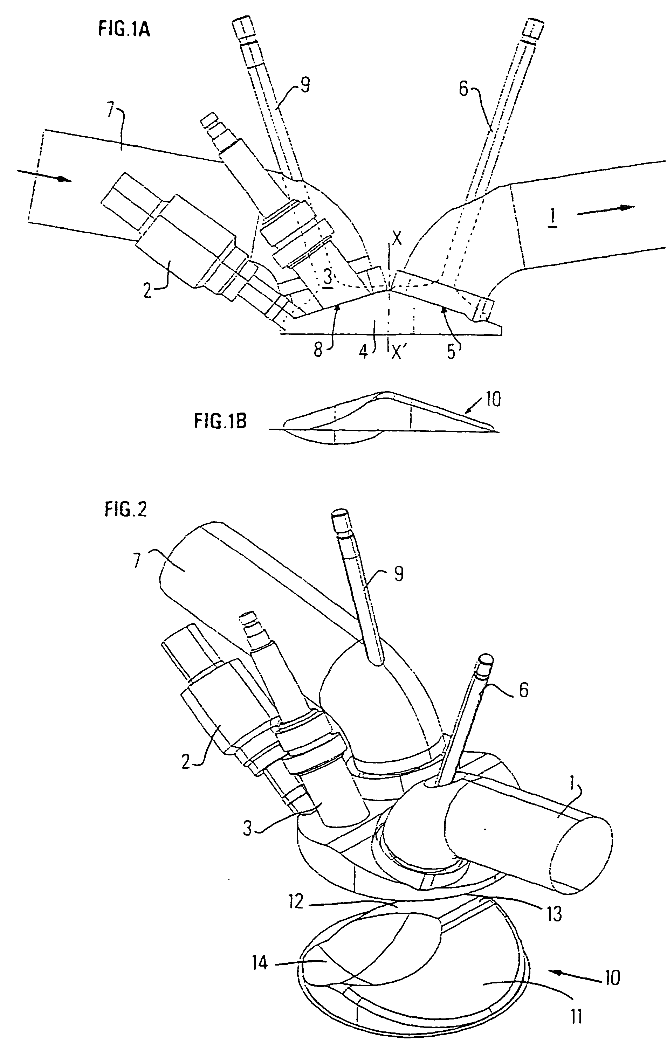

La figure 1A est une coupe selon un plan passant par les axes du conduit d'échappement 1, de l'injecteur 2 et d'un premier moyen d'allumage 3. Ces trois éléments débouchent dans la partie supérieure de la chambre de combustion 4 délimitée, de façon classique, par la culasse, la face supérieure du piston et le cylindre (non représentés).

Le conduit d'échappement 1 débouche par un orifice 5 dans la chambre de combustion 4 ; ledit orifice 5 étant obturé par intermittence par un moyen tel qu'une soupape 6.

Par ailleurs la présente invention comprend un conduit d'admission 7 qui débouche dans la chambre de combustion par un orifice spécifique 8. Un élément d'obturation intermittent 9 tel qu'une soupape est associé à l'orifice d'admission 8.

Selon l'invention, le conduit d'admission 7, l'injecteur 2 et le premier moyen d'allumage 3 sont disposés dans le même demi-cylindre, côté avant du véhicule. Ceci induit un démontage aisé aussi bien de l'injecteur 2 que du moyen d'allumage 3.

Par ailleurs cette disposition permet de créer dans la chambre de combustion 4 un mouvement dit de swirl, c'est-à-dire de rotation du flux gazeux autour de l'axe du cylindre.

La figure 1B montre le profil supérieur du piston associé 10.

Ce profil peut encore être vu sur la perspective de la figure 2.

Ainsi la face supérieure du piston 10 comprend deux pentes 11, 12 qui se rejoignent en partie supérieure au niveau d'une arête 13. Cette forme correspond sensiblement à celle de la face inférieure de la culasse, elle aussi en forme de toit à double pente.

A proximité de l'une des pentes 11 débouche le conduit d'échappement 1, côté arrière du véhicule.

Sur la deuxième pente 12 débouchent le conduit d'admission 7 ainsi que l'injecteur 2 et le premier moyen d'allumage 3 qui appartiennent donc tous au même demi-cylindre, côté avant du véhicule.

Préférentiellement l'axe de l'injecteur 2 est situé à moins de 60° du plan contenant l'axe longitudinal du cylindre. Ce positionnement est considéré comme "proche" de l'axe du cylindre. Il permet d'obtenir une combustion plus au centre de la chambre de combustion donc un meilleur rendement de combustion, car il existe en effet ainsi un contact minimum entre la flamme et les parois de la chambre de combustion.

Par ailleurs une portion de sphère 14 est creusée dans la face supérieure du piston 10. Plus précisément, cet évidement 14 est disposé en face de l'injecteur 2 et du premier moyen d'allumage 3, afin de favoriser la stratification du mélange du carburant et de l'air à l'intérieur de la chambre de combustion lors des fonctionnements avec une injection tardive, c'est-à-dire proche du point mort haut combustion.

Ainsi la présente invention propose un moteur à combustion interne à deux soupapes, l'une pour l'admission l'autre pour l'échappement et qui peut fonctionner à la fois en combustion homogène et en combustion stratifiée. Ceci permet des gains importants au niveau de la consommation de carburant.

Les petites cylindrées sont plus particulièrement visées par l'invention.

L'arbre à came, non représenté sur les figures, est central c'est-à-dire placé sensiblement au-dessus du sommet de la chambre de combustion 4.

Par ailleurs l'axe du moyen d'allumage 3 étant préférentiellement "proche" du plan contenant l'axe du cylindre, le moyen d'allumage lui-même peut être disposé à proximité immédiate du centre du cylindre, ce qui est un moyen permettant d'améliorer la combustion.

Selon un autre mode de réalisation de l'invention, un deuxième moyen d'allumage 15 est prévu.

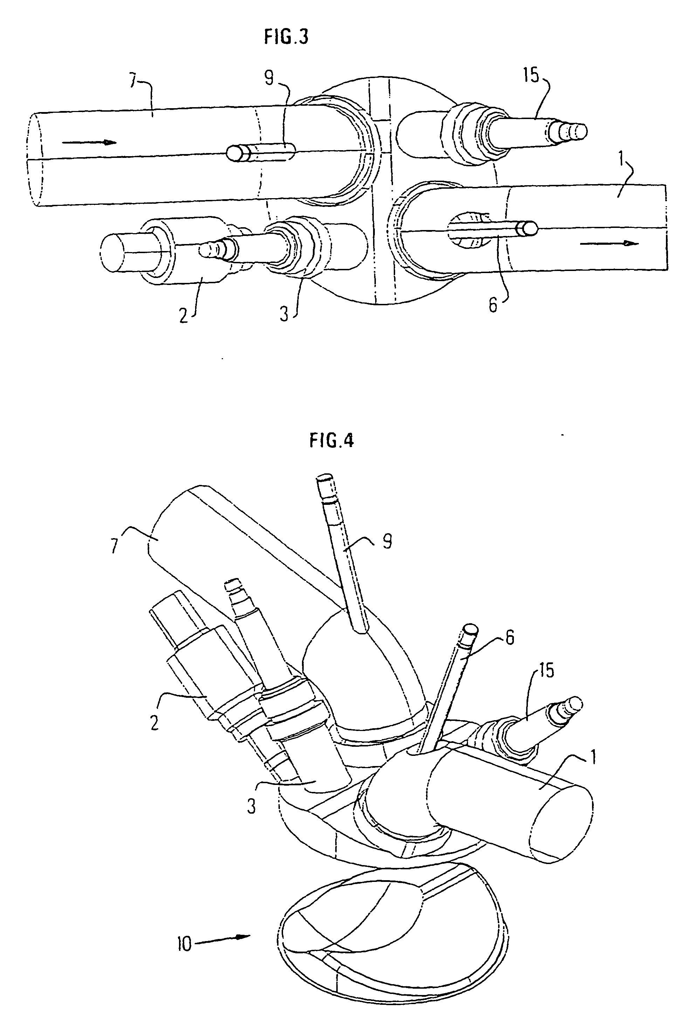

Les figures 3 et 4 illustrent ce mode de réalisation.

Le deuxième moyen d'allumage 15 débouche préférentiellement dans le deuxième demi cylindre qui ne contient pas l'admission 7 ni l'injecteur 2 et le premier moyen d'allumage 3. Le deuxième moyen d'allumage 15 débouche donc dans le même demi-cylindre que l'échappement 1, côté arrière du véhicule.

Le deuxième moyen d'allumage 15 permet d'améliorer la combustion. Il est utilisé de préférence pour prévenir les phénomènes de cliquetis aux fortes charges du moteur et permet ainsi l'utilisation d'un fort rapport volumétrique favorisant son rendement. Il renforce l'allumage au centre de la chambre de combustion.

Il permet aussi l'utilisation d'avances à l'allumage décalées pour améliorer la combustion dans les fonctionnements en charges partielles à la stoechiométrie.

La figure 4 montre l'agencement de ce deuxième mode de réalisation de l'invention, avec deux moyens d'allumage (3 et 15).

La face supérieure du piston 10 présente préférentiellement le profil décrit ci-avant, bien que celui-ci ne soit pas obligatoirement mis en oeuvre.

Au niveau de l'injecteur 2, celui-ci présentera de préférence un angle de jet réduit, c'est-à-dire de l'ordre de 40°. Cependant, dans le cas de l'utilisation d'un injecteur à tir décalé, c'est-à-dire avec un axe principal différent de l'axe du corps extérieur, l'angle d'injection ne sera plus limité par le problème du mouillage des parois du cylindre. Ainsi le jet de carburant pourra être avantageusement dirigé vers le centre de la chambre de combustion ou vers l'un des moyens d'allumage.

## Revendications

1. Moteur à combustion interne à 4 temps à allumage commandé et à injection directe comprenant au moins une chambre de combustion (4) délimitée par un piston (10), un cylindre et une culasse, un conduit d'admission (7) associé à une soupape d'admission (9), un conduit d'échappement (1) avec lequel coopère une soupape d'échappement (6), un premier moyen d'allumage (3) disposé à proximité de la soupape d'admission (9), un élément d'injection de carburant (2) placé à proximité et en dessous dudit premier moyen d'allumage (3), le conduit d'admission (7), l'élément d'injection (2) et le premier moyen d'allumage (3) étant disposés dans le même demi-cylindre, **caractérisé en ce que** l'axe de l'élément d'injection (2) est situé à moins de 60° du plan contenant l'axe longitudinal du cylindre.

2. Moteur selon la revendication 1, **caractérisé en ce que** la face supérieure du piston (10) présente un profil proche de celui de la face inférieure de la culasse et ledit piston présente un évidement (14) disposé à proximité de la région où débouche ledit premier moyen d'allumage (3).

3. Moteur selon la revendication 2, **caractérisé en ce que** l'évidement (14) dans le piston présente une forme sphérique ou semi-sphérique.

4. Moteur selon l'une quelconque des revendications précédentes, **caractérisé en ce que** ladite soupape d'admission (9) et ladite soupape d'échappement (6) sont diamétralement opposées.

5. Moteur selon l'une quelconque des revendications précédentes, **caractérisé en ce qu'**il comprend en outre un deuxième moyen d'allumage (15).

6. Moteur selon la revendication 5, **caractérisé en ce que** le deuxième moyen d'allumage (15) est disposé dans le demi cylindre qui contient la soupape d'échappement (6).

7. Moteur selon l'une quelconque des revendications 5 ou 6, **caractérisé en ce que** le deuxième moyen d'allumage (15) est disposé à côté de la soupape d'échappement (6).

## Patentansprüche

1. Viertrakt-Verbrennungsmotor mit gesteuerter Zündung und mit Direkteinspritzung, umfassend wenigstens eine Brennkammer (4), begrenzt durch einen Kolben (10), einen Zylinder und einen Zylinderkopf, eine Einlassleitung (7), verbunden mit einem Einlassventil (9), eine Auslassleitung(1), mit der ein Auslassventil (6) zusammenwirkt, ein erstes Zündmittel (3), angeordnet in der Nähe des Einlassventils (9), ein Treibstoff-Einspritzelement (2), angeordnet in der Nähe und unterhalb des ersten Zündmittels (3), wobei die Einlassleitung (7), das Einspritzelement (2) und das erste Zündmittel in demselben Halbzylinder angeordnet sind, **dadurch gekennzeichnet, dass** die Achse des Einspritzelements (2) innerhalb von 60° zu der Ebene angeordnet ist, die die Längsachse des Zylinders enthält.

2. Motor nach Anspruch 1, **dadurch gekennzeichnet, dass** die Oberseite des Kolbens (10) ein Profil nahe jenem der Unterseite des Zylinderkopfs aufweist und der Kolben eine Aussparung (14) aufweist, die in der Nähe des Bereichs angeordnet ist, wo das erste Zündmittel (3) mündet.

3. Motor nach Anspruch 2, **dadurch gekennzeichnet, dass** die Aussparung (14) in dem Kolben eine kugelförmige Form oder halbkugelförmige Form aufweist.

4. Motor nach einem der vorhergehenden Ansprüche, **dadurch gekennzeichnet, dass** das Einlassventil (9) und das Auslassventil (6) diametral gegenüberstehen.

5. Motor nach einem der vorhergehenden Ansprüche, **dadurch gekennzeichnet, dass** er außerdem ein zweites Zündmittel (15) umfasst.

6. Motor nach Anspruch 5, **dadurch gekennzeichnet, dass** das zweite Zündmittel (15) in dem Halbzylinder angeordnet ist, der das Auslassventil (6) enthält.

7. Motor nach einem der Ansprüche 5 oder 6, **dadurch gekennzeichnet, dass** das zweite Zündmittel (15) neben dem Auslassventil (6) angeordnet ist.

## Claims

1. 4-stroke internal combustion engine with controlled ignition and direct injection comprising at least one combustion chamber (4) defined by a piston (10), a cylinder and a cylinder-head, an intake conduit (7) associated with an intake valve (9), an exhaust conduit (1) with which an exhaust valve (6) co-operates, a first ignition means (3) arranged in the proximity of the intake valve (9), a fuel injection element (2) positioned in the proximity of and below the said first ignition means (3), the intake conduit (7), the injection element (2) and the first ignition means (3) being arranged in the same half-cylinder, ***characterised by** the fact that* the axis of the injection element (2) is situated by at least 60° from the plane containing the longitudinal axis of the cylinder.

2. Engine as described in claim 1, ***characterised by** the fact that* the upper face of the piston (10) has a profile close to that of the lower face of the cylinder-head and the said piston has a cavity (14) arranged in the proximity of the region in which the first ignition means (3) emerges.

3. Engine as described in claim 2, ***characterised by** the fact that* the cavity (14) in the piston has a spherical or semi-spherical shape.

4. Engine as described in any one of the preceding claims, ***characterised by** the fact that* the said intake valve (9) and the said exhaust valve (6) are diametrically opposed.

5. Engine as described in any one of the preceding claims, ***characterised by** the fact that* it also comprises a second ignition means (15).

6. Engine as described in claim 5, ***characterised by** the fact* that the second ignition means (15) is arranged in the half-cylinder which contains the exhaust valve (6).

7. Engine as described in any one of claims 5 or 6, ***characterised by** the fact* that the second ignition means (15) is arranged by the side of the exhaust valve (6).
